# EUROPEAN PATENT SPECIFICATION

(11) **EP 3 542 902 B1**
(45) Date of publication and mention of the grant of the patent: **17.05.2023**
(21) Application number: 19164250.3
(22) Date of filing: 21.03.2019
(51) Int. Cl.: B01J 41/05, B01J 41/07, B01J 41/13, B01J 41/20, B01D 15/36

(54) **ANION EXCHANGE STATIONARY PHASES BASED ON CROSSLINKED HYDROXYALKYLAMINE LAYER AND GLYCIDOL**
STATIONÄRE ANIONENAUSTAUSCHPHASEN AUF BASIS VON VERNETZTER HYDROXYALKYLAMINSCHICHT UND GLYCIDOL
PHASES STATIONNAIRES D'ÉCHANGE D'ANIONS À BASE DE COUCHE D'HYDROXYALKYLAMINE RÉTICULÉE ET DE GLYCIDOL

(30) Priority: 22.03.2018 US 201815928384; 10.08.2018 US 201816101264
(43) Date of publication of application: 25.09.2019
(73) Proprietor: Dionex Corporation, Sunnyvale, CA 94085 (US)
(72) Inventor: Saini, Charanjit, Fremont, CA California 94539 (US); Pohl, Christopher A., Union City, CA California 94587 (US)
(74) Representative: Boult Wade Tennant LLP

(56) References cited:
- US-A1- 2012 231 195
- US-A1- 2014 069 870
- US-B2- 7 291 395

## Description

### FIELD OF THE INVENTION

The invention generally relates to anion exchange stationary phases based on a crosslinked hydroxyalkylamine layer and glycidol for applications such as separating samples that include anions, and in particular a combination of haloacetic acids and inorganic anions in a single chromatographic run.

### BACKGROUND

Chromatography is a widely used analytical technique for the chemical analysis and separation of molecules. Chromatography involves the separation of one or more analyte species from other matrix components present in a sample. A stationary phase of a chromatography column is typically selected so that there is an interaction with the analyte. Such interactions can be ionic, hydrophilic, hydrophobic, or combinations thereof. For example, the stationary phase can be derivatized with ionic moieties that ideally will bind to ionic analytes and matrix components with varying levels of affinity. A mobile phase is percolated through the stationary phase and competes with the analyte and matrix components for binding to the ionic moieties. The mobile phase or eluent are terms used to describe a liquid solvent or buffer solution that is pumped into a chromatography column inlet. During this competition, the analyte and matrix components will elute off of the stationary phase as a function of time and then be subsequently detected at a detector. Examples of some typical detectors are a conductivity detector, a UV-VIS spectrophotometer, and a mass spectrometer. Over the years, chromatography has developed into a powerful analytical tool that is useful for creating a healthier, cleaner, and safer environment where complex sample mixtures can be separated and analyzed for various industries such as water quality, environmental monitoring, food analysis, pharmaceutical, and biotechnology.
US 2014/0069870 relates to treatment of anion exchange materials containing hydroxyl containing moieties in the beta position relative to the quaternary center in the hydroxide form with glycidol and this alters the selectivity of the anion exchange material. Furthermore, sequential treatments of first a hydroxide containing solution to put the anion exchange material in the hydroxide form followed by treatment with glycidol in an alternating sequence progressively changes selectivity. This chemistry provides the ability to reverse the elution order of sulfate and carbonate. US 7291395 relates to a method for making an ion exchange coating on a substrate comprising (a) reacting at least a first amine compound comprising amino groups, with at least a first polyfunctional compound, in the presence of a substrate to form a first condensation polymer reaction product, with a first unreacted excess of either at least said first amino group or polyfunctional compound functional moieties, irreversibly attached to the substrate, and (b) reacting at least a second amine compound or at least a second polyfunctional compound with unreacted excess in the first condensation polymer reaction product to form a second condensation polymer reaction product, and repeating the steps to produce the desired coating. A coated ion exchange substrate is so made.

In regards to water quality, haloacetic acids are a group of disinfection byproducts resulting from the reaction between the naturally occurring organic matters and the disinfectants used during water treatment. The presence of haloacetic acids in drinking water has been linked to several adverse effects including bladder, kidney, and colorectal cancer.

In addition, a group of common inorganic anions are routinely monitored in drinking water. For example, the National Primary Drinking Water Standards in the United States specify a Maximum Contaminant Level (MCL) for a number of inorganic anions such as fluoride, nitrite, and nitrate. The MCLs are specified to minimize potential health effects arising from the ingestion of these anions in drinking water. High levels of fluoride cause skeletal and dental fluorosis, and nitrite and nitrate can cause methemoglobulinemia, which can be fatal to infants. Other common anions, such as chloride and sulfate, are considered secondary contaminants. The National Secondary Drinking Water Standards in the U.S. are guidelines regarding taste, odor, color, and certain aesthetic characteristics. Although these guidelines are not federally enforced, they are recommended to all states as reasonable goals and many states adopt their own regulations governing these contaminants

Under certain circumstances, anion exchange stationary phases can have different affinity values to haloacetic acids and common inorganic anions, which makes analysis of both types of chemicals difficult during a single chromatographic run. When the retention times of various haloacetic acids and common inorganic anions are sufficiently different, the duration of a single chromatographic run can be unacceptably long. To simplify the analysis of water quality for more than one group of anions, Applicant believes that there is a need for anion exchange stationary phases that require relatively low eluent concentrations and can separate and resolve both haloacetic acids and common inorganic anions in a single relatively fast chromatographic run.

### SUMMARY

A first embodiment of an anion exchange stationary phase includes a negatively charged substrate particle, a base condensation polymer layer, a crosslinked ethanolamine condensation polymer, and a glycidol condensation layer. The base condensation polymer layer is attached to the negatively charged substrate particle. The base condensation polymer layer includes quaternary ammonium groups, ether groups, and hydroxy groups, in which at least a portion of the hydroxy groups is spaced from the quaternary ammonium groups by a first two carbon spacer. The base condensation polymer layer is formed from methylamine and 1,4-butanediol diglycidyl ether. The crosslinked ethanolamine condensation polymer layer is covalently attached to the base condensation polymer layer. The crosslinked ethanolamine condensation polymer layer includes quaternary ammonium groups, ether groups, and hydroxy groups. At least a portion of the ether groups of the crosslinked ethanolamine condensation polymer layer are spaced from the quaternary ammonium groups by a second two carbon spacer. At least a portion of the hydroxy groups of the crosslinked ethanolamine condensation polymer layer are spaced from the quaternary ammonium groups by the first two carbon spacer. The glycidol condensation layer is covalently attached to the crosslinked ethanolamine condensation polymer layer. The glycidol condensation layer includes a plurality of dihydroxy groups, in which each dihydroxy group includes a first hydroxy group and a second hydroxy group. The first hydroxy is spaced from the second hydroxy by the first two carbon spacer, in which at least a portion of the first hydroxy groups are spaced from the quaternary ammonium groups of the crosslinked ethanolamine condensation polymer layer by the first two carbon spacer.

In regards to the first embodiment, the first two carbon spacer includes a chemical formula of 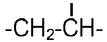 and the second two carbon spacer includes a chemical formula of -CH₂-CH₂-.

A second embodiment is a method of forming an anion exchange stationary phase by reacting 1,4-butanediol diglycidyl ether with methylamine to form a base condensation polymer layer on a negatively charged substrate particle. The base condensation polymer layer is reacted in with a number of reaction cycles to form a crosslinked ethanolamine polymer layer, in which the number of reaction cycles ranges from about three to about ten. Each reaction cycle includes a polyepoxide treatment followed by an ethanolamine treatment. The crosslinked ethanolamine polymer layer is reacted with a first glycidol and then a second glycidol**.** The anion exchange stationary phase is formed after the glycidol treatments of the crosslinked ethanolamine polymer layer.

In regards to the second embodiment, the method can further include treating the crosslinked ethanolamine polymer layer with a hydroxide solution before each of the first glycidol treatment and the second glycidol treatment.

In regards to any of the second embodiments, the negatively charged substrate particles are contained in a first column. The reacting of the 1,4-butanediol diglycidyl ether with the methylamine can include flowing a solution of the 1,4-butanediol diglycidyl ether and the methylamine through the first column to form the base condensation polymer layer on the negatively charged substrate particles.

In regards to any of the second embodiments, the polyepoxide treatment can include flowing a solution of the polyepoxide through the first column and the ethanolamine treatment can include flowing a solution of the ethanolamine through the first column.

In regards to the any of the second embodiments, the first glycidol treatment and the second glycidol treatment can each include flowing a solution of the glycidol through the first column.

In regards to the any of the second embodiments, in which the method further includes, after the glycidol treatments, removing the packed bed of the anion exchange stationary phase from the first column into a container. The anion exchange stationary phase is treated with a hydroxide solution and then the hydroxide solution is removed. The hydroxide treated anion exchange stationary phase is packed into a second column in which a diameter of the second column is less than the first column.

In regards to the any of the second embodiments, the number of the reaction cycles ranges from about 3 to about 4.

In regards to any of the second embodiments, the polyepoxide can include a diepoxide compound. The polyepoxide can include an alkyldiol diglycidyl ether. The diepoxide compound can be 1,4-butanediol diglycidyl ether.

Described but not claimed is a third embodiment of an anion exchange stationary phase includes a negatively charged substrate particle, a base condensation polymer layer, a first polyepoxide condensation reaction product, a first ethanolamine condensation reaction product, a second polyepoxide condensation reaction product, a second ethanolamine condensation reaction product, a third polyepoxide condensation reaction product, a third ethanolamine condensation reaction product, a first glycidol condensation reaction product, and a second glycidol condensation reaction product.

In regards to any of the third embodiments, the anion exchange stationary phase may further include one or more of a fourth, fifth, sixth, seventh, eighth, ninth, and ten polyepoxide condensation reaction products.

In regards to any of the third embodiments, the anion exchange stationary phase may include one or more of a fourth, fifth, sixth, seventh, eighth, ninth, and ten ethanolamine condensation reaction products.

In regards to any of the third embodiments, the anion exchange stationary phase may include one or more of a third, fourth, fifth, sixth, seventh, eighth, ninth, and ten glycidol condensation reaction products.

In regards to any of the third embodiments, the base condensation polymer layer is attached to the negatively charged substrate particle. The base condensation polymer layer includes a reaction product of **i)** a primary amine and **ii)** a first polyepoxide compound. The first polyepoxide condensation reaction product can be covalently attached to the base condensation polymer layer. The first polyepoxide condensation reaction product includes a reaction product of **i)** an amine group of the base condensation polymer layer and **ii)** a second polyepoxide compound, in which the amine group of the base condensation polymer layer includes a positive charge so that the base condensation polymer layer is ionically coupled to the negatively charged substrate particle. The first ethanolamine condensation reaction product can be covalently attached to the first polyepoxide condensation reaction product. The first ethanolamine condensation reaction product includes a reaction product of **i)** an epoxide group of the first polyepoxide condensation reaction product, and **ii)** a first ethanolamine. The second polyepoxide condensation reaction product can be covalently attached to the first ethanolamine condensation reaction product. The second polyepoxide condensation reaction product includes a reaction product of **i)** an amine group of the first ethanolamine condensation reaction product and **ii)** a third polyepoxide compound. The second ethanolamine condensation reaction product can be covalently attached to the second polyepoxide condensation reaction product. The second ethanolamine condensation reaction product includes a reaction product of **i)** an epoxide group of the second polyepoxide condensation reaction product and **ii)** a second ethanolamine. The third polyepoxide condensation reaction product can be covalently attached to the second ethanolamine condensation reaction product. The third polyepoxide condensation reaction product includes a reaction product of **i)** an amine group of the second ethanolamine condensation reaction product and **ii)** a fourth polyepoxide compound. The third ethanolamine condensation reaction product can be covalently attached to the third polyepoxide condensation reaction product. The third ethanolamine condensation reaction product includes a reaction product of **i)** an epoxide group of the third polyepoxide condensation reaction product and **ii)** a third ethanolamine. The first glycidol condensation reaction product can be covalently attached to the third ethanolamine condensation product. The first glycidol condensation reaction product includes a reaction product of **i)** an amine of the third ethanolamine condensation reaction product and **ii)** a first glycidol. The second glycidol condensation polymer can be covalently attached to the first glycidol condensation product. The second glycidol condensation polymer includes a reaction product of **i)** a hydroxy group of the first glycidol condensation reaction product, in which a portion of the hydroxy groups of the first glycidol condensation reaction product is spaced from an amine of the third ethanolamine condensation reaction product by a two carbon spacer, and **ii)** a second glycidol.

In regards to any of the third embodiments, the second polyepoxide condensation reaction product may further include the reaction product of **i)** a hydroxy group of the first ethanolamine condensation reaction product, and **ii)** the third polyepoxide compound.

In regards to any of the third embodiments, one or more of the second, third, fourth, fifth, sixth, seventh, eighth, ninth, and ten polyepoxide condensation reaction products may further include the reaction product of **i)** a hydroxy group of one of the ethanolamine condensation reaction products and **ii)** another polyepoxide compound.

In regards to any of the third embodiments, the first polyepoxide compound, second polyepoxide compound, third polyepoxide compound, and the fourth polyepoxide compound are each a diepoxide compound. The diepoxide compound may include an alkyldiol diglycidyl ether. The diepoxide compound may include 1,4-butanediol diglycidyl ether.

Further provided is the use of an anion exchange stationary phase according to claim 1 for separating haloacetic acids in the presence of inorganic anions. The use includes flowing an eluent through a chromatography column, the chromatography column containing the anion exchange stationary phase, in which the eluent includes a hydroxide.

In regards to the use, it can further include separating at least one analyte from a sample injected into the chromatography column.

In regards to any of the first, second, and third embodiments, the negatively charged substrate particle can include a crosslinked divinylbenzene and ethylvinyl benzene particle, in which at least a surface of the negatively charged substrate particle includes sulfonate groups.

In regards to any of the first, second, and third embodiments, the base condensation polymer layer is positively charged and ionically attached to the negatively charged substrate particle.

In regards to any of the third embodiments, the primary amine can be include alkylamine. The alkylamine can include methylamine.

In an embodiment of a chromatography column, it can contain the anion exchange stationary phases of any one of the first, second, and third embodiments. The chromatography column includes a hollow cylindrical housing, an inlet port, an outlet port, two frits where each one is coupled to the inlet port and the outlet port. Two end fittings can be used to bind the two frits to the respective inlet and outlet ports.

### BRIEF DESCRIPTION OF THE DRAWINGS

The accompanying drawings, which are incorporated herein and constitute part of this specification, illustrate presently preferred embodiments of the invention, and, together with the general description given above and the detailed description given below, serve to explain features of the invention (wherein like numerals represent like elements).
**Figure 1** illustrates various chemical structures of reagents that can be used in forming condensation polymers and condensation reaction products for anion exchange resins.
**Figure 2** illustrates a schematic representation of a base condensation polymer layer attached to a negatively charged substrate particle.
**Figure 3** illustrates a schematic of a first diepoxide covalently attached to the base condensation polymer and forming a pendant epoxide group to form a first diepoxide condensation reaction product.
**Figure 4** illustrates a schematic of amine groups of a first ethanolamine reagent covalently attached to the pendant epoxide groups to form a first ethanolamine condensation reaction product.
**Figure 5** illustrates a schematic of a second diepoxide covalently attached to a hydroxy group or amine group of the first ethanolamine condensation reaction product to form a second diepoxide condensation reaction product as three branches of pendant epoxide groups.
**Figure 6** illustrates a schematic of the second ethanolamine covalently attached to the pendant epoxide groups of the second diepoxide condensation reaction product to form a second ethanolamine condensation reaction product.
**Figure 7** illustrates a schematic of a first glycidol covalently attached to the second ethanolamine condensation reaction product where the amine group or the pendant hydroxy group of the second ethanolamine condensation reaction product has reacted with an epoxy group of the glycidol to form a first glycidol condensation reaction product that includes a branch of pendant dihydroxy groups.
**Figure 8** illustrates a schematic of a second glycidol product covalently attached to the hydroxy group of the first glycidol condensation reaction product to form a second glycidol condensation reaction product.
**Figure 9** illustrates an equilibrium of a hydroxy group that is spaced from a quaternary ammonium group by a two carbon spacer where the hydroxy group is neutral or negatively charged. The deprotonated hydroxy group is shown as reacting with the epoxy group of the glycidol.
**Figure 10** illustrates four chromatograms that separated a standard solution containing various haloacetic acids and common inorganic anions using four different anion exchange resins, which are Thermo Scientific^{™} IonPac^{™} chromatography columns AS24, AS24A, AS26, and an anion exchange resin that includes crosslinked ethanolamine with glycidol treatments with substrate particles having a diameter of about 6.5 microns.
**Figure 11** illustrates three chromatograms that separated a standard solution containing 15 anions using three different anion exchange resins. The resins were synthesized with substrate particles having a diameter of about 4 to 5 microns.
**Figure 12** illustrates two chromatograms that separated a standard solution containing 18 anions using two different anion exchange resins. The resins were synthesized with substrate particles having a diameter of about 4 to 5 microns.

### DETAILED DESCRIPTION OF EMBODIMENTS

The following detailed description should be read with reference to the drawings, in which like elements in different drawings are identically numbered. The drawings, which are not necessarily to scale, depict selected embodiments and are not intended to limit the scope of the invention. The detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention. As used herein, the terms "about" or "approximately" for any numerical values or ranges indicate a suitable dimensional tolerance that allows the part or collection of components to function for its intended purpose as described herein.

Herein the term "alkyl," by itself or as part of another substituent, means, unless otherwise stated, a straight or branched chain, or cyclic hydrocarbon radical, or combination thereof, which may be fully saturated, mono- or polyunsaturated and can include di- and multivalent radicals, having the number of carbon atoms designated (i.e., C₁-C₁₀ means one to ten carbons). Examples of saturated hydrocarbon radicals include, but are not limited to, groups such as methyl, ethyl, n- propyl (e.g., -CH₂-CH₂-CH₃, -CH₂-CH₂-CH₂-), isopropyl, n-butyl, t-butyl, isobutyl, sec- butyl, cyclohexyl, (cyclohexyl)methyl, cyclopropylmethyl, homologs and isomers of, for example, n-pentyl, n-hexyl, n-heptyl, n-octyl, and the like. An unsaturated alkyl group is one having one or more double bonds or triple bonds. Examples of unsaturated alkyl groups include, but are not limited to, vinyl, 2-propenyl, crotyl, 2- isopentenyl, 2- (butadienyl), 2,4-pentadienyl, 3-(1,4-pentadienyl), ethynyl, 1 - and 3- propynyl, 3-butynyl, and the higher homologs and isomers. The term "alkyl," unless otherwise noted, is also meant to include those derivatives of alkyl defined in more detail below, such as "heteroalkyl". Alkyl groups that are limited to hydrocarbon groups are termed "homoalkyl". The term "alkyl" can also mean "alkylene" or "alkyldiyl" as well as alkylidene in those cases where the alkyl group is a divalent radical.

Herein the term "alkylene" or "alkyldiyl" by itself or as part of another substituent means a divalent radical derived from an alkyl group, as exemplified, but not limited, by -CH₂CH₂CH₂- (propylene or propane-1,3-diyl), and further includes those groups described below as "heteroalkylene". Typically, an alkyl (or alkylene) group will have from 1 to about 30 carbon atoms, preferably from 1 to about 25 carbon atoms, more preferably from 1 to about 20 carbon atoms, even more preferably from 1 to about 15 carbon atoms and most preferably from 1 to about 10 carbon atoms. A "lower alkyl", "lower alkylene" or "lower alkyldiyl" is a shorter chain alkyl, alkylene or alkyldiyl group, generally having about 10 or fewer carbon atoms, about 8 or fewer carbon atoms, about 6 or fewer carbon atoms or about 4 or fewer carbon atoms.

Herein the term "alkylidene" by itself or as part of another substituent means a divalent radical derived from an alkyl group, as exemplified, but not limited, by CH₃CH₂CH₂= (propylidene). Typically, an alkylidene group will have from 1 to about 30 carbon atoms, preferably from 1 to about 25 carbon atoms, more preferably from 1 to about 20 carbon atoms, even more preferably from 1 to about 15 carbon atoms and most preferably from 1 to about 10 carbon atoms. A "lower alkyl" or "lower alkylidene" is a shorter chain alkyl or alkylidene group, generally having about 10 or fewer carbon atoms, about 8 or fewer carbon atoms, about 6 or fewer carbon atoms or about 4 or fewer carbon atoms.

Herein the terms "alkoxy," "alkylamino" and "alkylthio" (or thioalkoxy) are used in their conventional sense, and refer to those alkyl groups attached to the remainder of the molecule via an oxygen atom, an amino group, or a sulfur atom, respectively.

Herein the term "heteroalkyl," by itself or in combination with another term, means, unless otherwise stated, a stable straight or branched chain, or cyclic hydrocarbon radical, or combinations thereof, consisting of the stated number of carbon atoms and at least one heteroatom selected from the group consisting of O, N, Si, S and B, and wherein the nitrogen and sulfur atoms may optionally be oxidized and the nitrogen heteroatom may optionally be quaternized. The heteroatom(s) O, N, B, S and Si may be placed at any interior position of the heteroalkyl group or at the position at which the alkyl group is attached to the remainder of the molecule. Examples include, but are not limited to, -CH₂-CH₂-O-CH₃, - CH₂-CH₂-NHCH₃, -CH₂- CH₂-N(CH₃)-CH₃, -CH₂-S-CH₂-CH₃, -CH₂-CH₂,-S(O)-CH₃, -CH₂-CH₂-S(O)2-CH₃, - CH=CH-O-CH₃, -Si(CH₃)₃, -CH₂-CH=N-OCH₃, and -CH=CH-N(CH₃)-CH₃. Up to two heteroatoms may be consecutive, such as, for example, -CH₂-NH-OCH₃ and -CH₂- O-Si(CH₃)₃. Similarly, the term "heteroalkylene" by itself or as part of another substituent means a divalent radical derived from heteroalkyl, as exemplified, but not limited by, -CH₂- CH₂-S-CH₂-CH₂- and -CH₂-S-CH₂-CH₂-NH-CH₂-. For heteroalkylene groups, heteroatoms can also occupy either or both of the chain termini (e.g., alkyleneoxy, alkylenedioxy, alkyleneamino, alkylenediamino, and the like). Optionally, for alkylene and heteroalkylene linking groups, no orientation of the linking group is implied by the direction in which the formula of the linking group is written. For example, the formula -CO₂R'- optionally represents both -C(O)OR' and - OC(O)R'.

Herein the terms "cycloalkyl" and "heterocycloalkyl", by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1 - cyclohexenyl, 3-cyclohexenyl, cycloheptyl, and the like. Examples of heterocycloalkyl include, but are not limited to, 1-(1,2,5,6-tetrahydropyridyl), 1-piperidinyl, 2-piperidinyl, 3-piperidinyl, 4-morpholinyl, 3-morpholinyl, tetrahydrofuran- 2-yl, tetrahydrofuran-3-yl, tetrahydrothien-2-yl, tetrahydrothien-3-yl, 1 -piperazinyl, 2- piperazinyl, and the like.

Herein the terms "halo" or "halogen," by themselves or as part of another substituent, mean, unless otherwise stated, a fluorine, chlorine, bromine, or iodine atom. Additionally, terms such as "haloalkyl," are meant to include monohaloalkyl and polyhaloalkyl. For example, the term "halo(C₁-C₄)alkyl" is mean to include, but not be limited to, trifluoromethyl, 2,2,2-trifluoroethyl, 4-chlorobutyl, 3-bromopropyl, and the like.

Herein the term "aryl" means, unless otherwise stated, a polyunsaturated, aromatic, substituent that can be a single ring or multiple rings (preferably from 1 to 3 rings), which are fused together or linked covalently. The term "heteroaryl" refers to aryl groups (or rings) that contain from one to four heteroatoms selected from N, O, S, Si and B, wherein the nitrogen and sulfur atoms are optionally oxidized, and the nitrogen atom(s) are optionally quaternized. A heteroaryl group can be attached to the remainder of the molecule through a heteroatom. Non-limiting examples of aryl and heteroaryl groups include phenyl, 1 - naphthyl, 2-naphthyl, 4-biphenyl, 1 -pyrrolyl, 2-pyrrolyl, 3-pyrrolyl, 3-pyrazolyl, 2-imidazolyl, 4-imidazolyl, pyrazinyl, 2-oxazolyl, 4- oxazolyl, 2-phenyl-4-oxazolyl, 5-oxazolyl, 3-isoxazolyl, 4- isoxazolyl, 5-isoxazolyl, 2- thiazolyl, 4-thiazolyl, 5-thiazolyl, 2-furyl, 3-furyl, 2-thienyl, 3-thienyl, 2-pyridyl, 3- pyridyl, 4-pyridyl, 2-pyrimidyl, 4-pyrimidyl, 5-benzothiazolyl, purinyl, 2-benzimidazolyl, 5-indolyl, 1 -isoquinolyl, 5-isoquinolyl, 2-quinoxalinyl, 5-quinoxalinyl, 3-quinolyl, and 6- quinolyl. Substituents for each of the above noted aryl and heteroaryl ring systems are selected from the group of acceptable substituents described below.

For brevity, herein the term "aryl" when used in combination with other terms (e.g., aryloxy, arylthioxy, arylalkyl) includes both aryl and heteroaryl rings as defined above. Thus, the term "arylalkyl" is meant to include those radicals in which an aryl group is attached to an alkyl group (e.g., benzyl, phenethyl, pyridylmethyl and the like) including those alkyl groups in which a carbon atom (e.g., a methylene group) has been replaced by, for example, an oxygen atom (e.g., phenoxymethyl, 2- pyridyloxymethyl, 3-(1 - naphthyloxy)propyl, and the like).

Each of the above terms (e.g., "alkyl," "heteroalkyl," "aryl" and "heteroaryl") are meant to include both substituted and unsubstituted forms of the indicated radical. Preferred substituents for each type of radical are provided below.

Substituents for the alkyl and heteroalkyl radicals (including those groups often referred to as alkylene, alkenyl, heteroalkylene, heteroalkenyl, alkynyl, cycloalkyl, heterocycloalkyl, cycloalkenyl, and heterocycloalkenyl) are generically referred to as "alkyl group substituents," and they can be one or more of a variety of groups selected from, but not limited to: substituted or unsubstituted aryl, substituted or unsubstituted heteroaryl, substituted or unsubstituted heterocycloalkyl, -OR', =O, =NR', =N-OR', -NR'R", -SR', -halogen, -SiR'R"R‴, -OC(O)R', -C(O)R', -CO₂R', - CONR'R", -OC(O)NR'R", - NR"C(O)R', -NR'-C(O)NR"R‴, - NR"C(O)₂R', -NR- C(NR'R"R‴)=NRʺʺ, -NR-C(NR'R")=NR"', -S(O)R', -S(O)₂R', -OS(O)₂R', - S(O)₂NR'R", -NRSO2R', -CN and -NO₂ in a number ranging from zero to (2m'+1 ), where m' is the total number of carbon atoms in such radical. R', R", R‴ and Rʺʺ each preferably independently refer to hydrogen, substituted or unsubstituted heteroalkyl, substituted or unsubstituted aryl, e.g., aryl substituted with 1-3 halogens, substituted or unsubstituted alkyl, alkoxy or thioalkoxy groups, or arylalkyl groups. When a compound of the invention includes more than one R group, for example, each of the R groups is independently selected as are each R', R", R‴ and Rʺʺ groups when more than one of these groups is present. When R' and R" are attached to the same nitrogen atom, they can be combined with the nitrogen atom to form a 5-, 6-, or 7- membered ring. For example, -NR'R" is meant to include, but not be limited to, 1-pyrrolidinyl and 4-morpholinyl. From the above discussion of substituents, one of skill in the art will understand that the term "alkyl" is meant to include groups including carbon atoms bound to groups other than hydrogen groups, such as haloalkyl (e.g., -CF₃ and -CH₂CF₃) and acyl (e.g., -C(O)CH₃, -C(O)CF₃, -C(O)CH₂OCH₃, and the like).

Similar to the substituents described for the alkyl radical, substituents for the aryl and heteroaryl groups are generically referred to as "aryl group substituents." The substituents are selected from, for example: substituted or unsubstituted alkyl, substituted or unsubstituted aryl, substituted or unsubstituted heteroaryl, substituted or unsubstituted heterocycloalkyl, -OR', =O, =NR', =N-OR', -NR'R", -SR', -halogen, - SiR'R"R‴, -OC(O)R', -C(O)R', -CO2R', -CONR'R", -OC(O)NR'R", -NR"C(O)R', -NR'- C(O)NR"R‴, -NR"C(O)₂R', -NR-C(NR'R"R‴)=NRʺʺ, -NR-C(NR'R")=NR‴, -S(O)R', - S(O)₂R', - S(O)₂NR'R", -NRSO₂R', -CN and - NO₂, -R', -N₃, -CH(Ph)₂, fluoro(C₁- C₄)alkoxy, and fluoro(C₁- C₄)alkyl, in a number ranging from zero to the total number of open valences on the aromatic ring system; and where R', R", R‴ and Rʺʺ are preferably independently selected from hydrogen, substituted or unsubstituted alkyl, substituted or unsubstituted heteroalkyl, substituted or unsubstituted aryl and substituted or unsubstituted heteroaryl. When a compound of the invention includes more than one R group, for example, each of the R groups is independently selected as are each R', R", R‴ and Rʺʺ groups when more than one of these groups is present.

In an embodiment, sulfonated resin particles can be coated with a reaction product of 1,4-butanediol diglycidyl ether and methylamine to form a base layer on the sulfonated resin particles by electrostatic interaction. Next, four reaction cycles of 1,4-butanediol diglycidyl ether and ethanolamine were sequentially added to form a crosslinked layer that was hydrophilic and provides divalent anion selectivity. The crosslinked layer may be referred to as a hyperbranched polymer. To further improve the separation of haloacetic acids and common inorganic anions, two glycidol treatments were used in modifying the hyperbranched polymer. The addition of glycidol in the hyperbranched architecture provided an added benefit to improve its ability to pack the resin into column tubes. Such glycidol containing hyperbranched architectures are unusually easy to pack with a simple hydroxide packing solution, providing unusually high chromatographic performance compared to similar materials not containing glycidol. Hyperbranched materials not containing glycidol tend to be highly dilatent, shear thickening slurries, which tend to produce fronting peak shape when packed at optimum flow rates. It is believed that glycidol rich phases exhibit less repulsive interactions due to the shielding of the charged groups, which reduces shear thickening behavior and makes them easier to pack into a chromatography column. The resulting stationary phase has many available hydroxy groups to produce crosslinking across and also to aid in maintaining the hydrophilicity of the resin. The hydrophilic highly crosslinked polymer provides good selectivity for haloacetic acid separation along with common anions.

Anion exchange stationary phases were synthesized with a crosslinked ethanolamine layer followed by a glycidol treatment that results in a chromatography resin capable of separating haloacetic acid and common inorganic anions in a relatively short single chromatographic run (e.g., less than 20 to 30 minutes). Not only are the chromatographic runs shorter with the anion exchange stationary phases described herein, but lower concentrations of eluent can be employed when performing the single chromatographic run. In general, lower eluent concentrations are desirable for reducing cost and chemical waste. Haloacetic acids are carboxylic acids in which a halogen atom takes the place of a hydrogen atom in acetic acid. Examples of haloacetic acids include monochloroacetic acid, dichloroacetic acid, trichloroacetic acid, bromoacetic acid, dibromoacetic acid, tribromoacetic acid, bromochloroacetic acid, bromodichloroacetic acid, and dibromochloroacetic acid. Common inorganic anions include bromate, bromide, chlorate, chloride, chlorite, fluoride, nitrate, nitrite, phosphate, sulfate, and, carbonate, which are often monitored in drinking water (e.g., EPA Method 300.0). It should be noted that anion exchange stationary phases may also be referred to interchangeably as anion exchange resins. The anions chlorite, bromate, and chlorate may also be referred to as oxyhalides.

In an embodiment, a series of condensation polymer layers and condensation reaction products can be formed on a substrate. A polymer formed in a polymerization reaction with an amine and a polyepoxide may be referred to as a condensation polymer, condensation polymer reaction product, epoxy resin, or epoxy amine resin. Similarly, a condensation reaction product can be a product from a condensation reaction between a polymer and a reagent (e.g., epoxide or amine based reagent chemical). A polyepoxide includes a compound having two or more epoxide functional groups such as a diepoxide. An example of a polyepoxide may be an alkyldiol diglycidyl ether. Other examples of polyepoxides include butadiene diepoxide, ethyleneglycol diglycidyl ether, butanediol diglycidyl ether (e.g., 1,4-butanediol diglycidyl ether), diethyleneglycol diglycidyl ether, hexanediol diglycidyl ether, glycerol triglycidyl ether and numerous other compounds containing two or more epoxy groups including epoxy resins commonly used in commercial epoxy formulations.

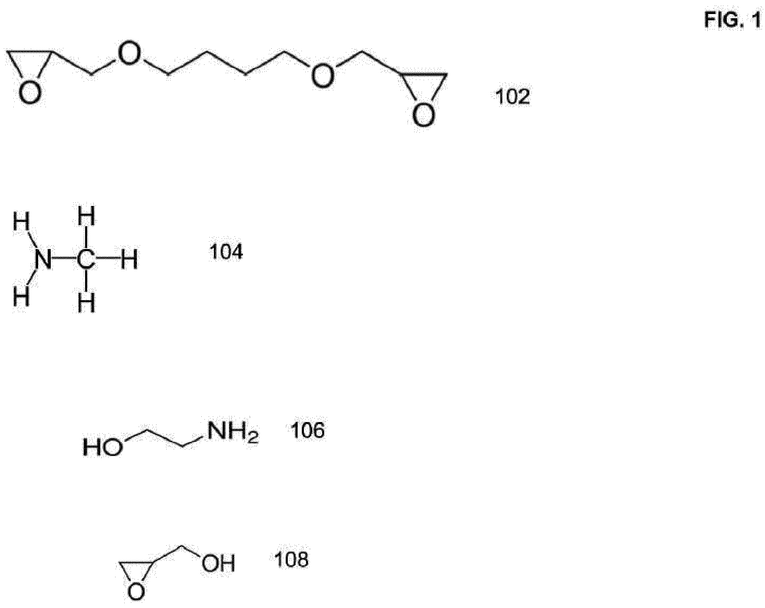

**Figure 1** illustrates various chemical structures of reagents that can be used in forming condensation polymers and condensation reaction products for anion exchange resins. The reagents illustrated in Figure 1 are 1,4-butanediol diglycidyl ether **102**, methylamine **104**, ethanolamine **106**, and glycidol **108**.

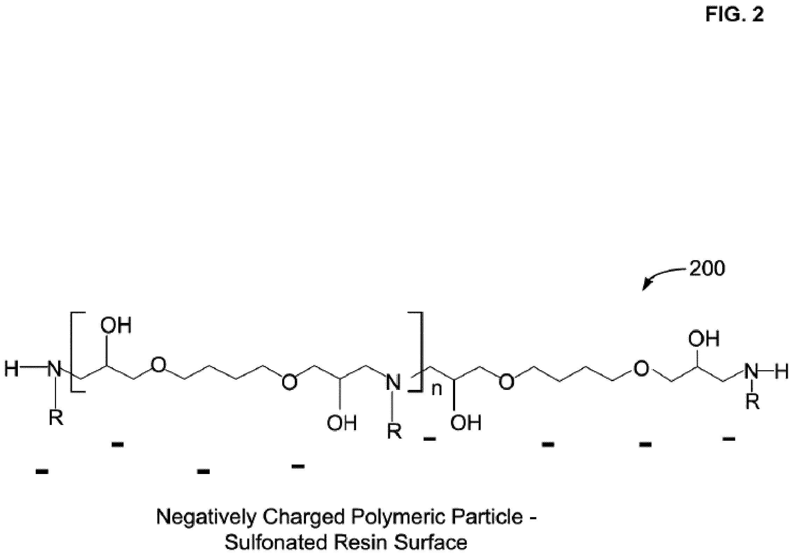

**Figure 2** illustrates a schematic representation of a base condensation polymer layer **200** attached to a negatively charged substrate particle. The base condensation polymer **200** can be formed by the reaction of a primary amine compound and an alkyldiol diglycidyl ether. The negatively charged substrate particle can be contained as a packed bed in a reaction column. A solution of the polyepoxide and the primary amine can be flowed through the reaction column to form the base condensation polymer layer on the negatively charged substrate particle. The base condensation polymer includes quaternary ammonium groups, ether groups, and hydroxy groups. An example of a primary amine and an alkyldiol diglycidyl ether respectively include a methyl amine **104** and 1,4-butanediol diglycidyl ether **102** (see **Figure 1**). In an aspect, the mole ratio can be a 1:1 mole ratio of primary amine and alkyldiol diglycidyl ether to form the base polymer layer. Although the base polymer layer is depicted as linear, it is possible for some of the amine groups to be quaternized and form either a branched or crosslinked portions. The base layer **200** can be formed in the presence of a negatively charged polymeric particle where the base layer associates and/or partially binds with the negatively charged polymeric particle, as illustrated in **Figure 2****.** Referring to **Figure 2-4**, and **9**, **R** may be an alkyl group such as, for example, methyl, ethyl, propyl, butyl, pentyl, or hexyl, but is preferably methyl. The term n may be value ranging from about 5 to 150.

The negatively charged polymeric particle can be any inert polymeric substrate particle that is chemically stable under the intended conditions of use (e.g., pH 0 to 14). The polymeric particle may be based on a divinylbenzene (DVB) crosslinking monomer and a support resin monomer where the support resin monomer may be an ethylvinylbenzene (EVB) monomer, a styrene monomer, and a combination thereof. The mole percent of DVB can be 55% and EVB can be 45%. The support resin particles may have a diameter ranging from about 1 micron to about 20 microns, preferably from about 2 microns to about 10 microns, and more preferably from about 3 microns to about 7 microns. The support resin particles may have a surface area ranging from about 20 m²/g to about 800 m²/g, preferably from about 20 m²/g to about 500 m²/g, more preferably from about 20 m²/g to about 100 m²/g, and yet more preferably be about 20 m²/g to about 30 m²/g. The support resin particles may have a pore size ranging from about 1000 angstroms to about 2000 angstroms.

In some embodiments, the negatively charged substrate particle may include one or more super macroporous particles (SMP). SMP can be obtained from commercial sources, including Agilent PLRP-s1000A and Waters Styragel HR4-HR6. The super macroporous particle can have a diameter of 4-6 µm, a surface area of 20-30 m²/g, pore sizes of 1000Å -2000Å, and a crosslinking mole ratio of 55% of the divinylbenzene and a mole ratio of 45% of the ethylvinylbenzene.

Alternatively, the polymeric particles may be based on other vinylaromatic monomers such as alpha-methylstyrene, chlorostyrene, chloromethylstyrene, vinyltoluene, vinyl naphthalene, and a combination thereof. The polymeric particles may also be based on unsaturated monomers, and copolymers of the above vinylaromatic monomers and unsaturated monomers. Preferably such monomers will be copolymerized with a vinylaromatic crosslinking monomer such as divinylbenzene but other vinylaromatic crosslinking monomers such as trivinylbenzene, divinylnaphthalene, and a combination thereof may also be used.

The polymeric particles can be sulfonated to create a negative charge at least on the surface of the particle. For example, particles made with 45% DVB and 55% EVB can be sulfonated by treating the particles with glacial acetic acid and concentrated sulfuric acid.

Referring back to **Figure 2****,** base layer **200** can be reacted with at least three reactions cycles of reagents to form a crosslinked ethanolamine polymer layer. Each reaction cycle includes **a)** a polyepoxide treatment and **b)** a hydroxyalkylamine treatment. The polyepoxide treatment can include flowing a solution of the polyepoxide through the reaction column and the hydroxyalkylamine treatment can include flowing a solution of the ethanolamine through the reaction column.

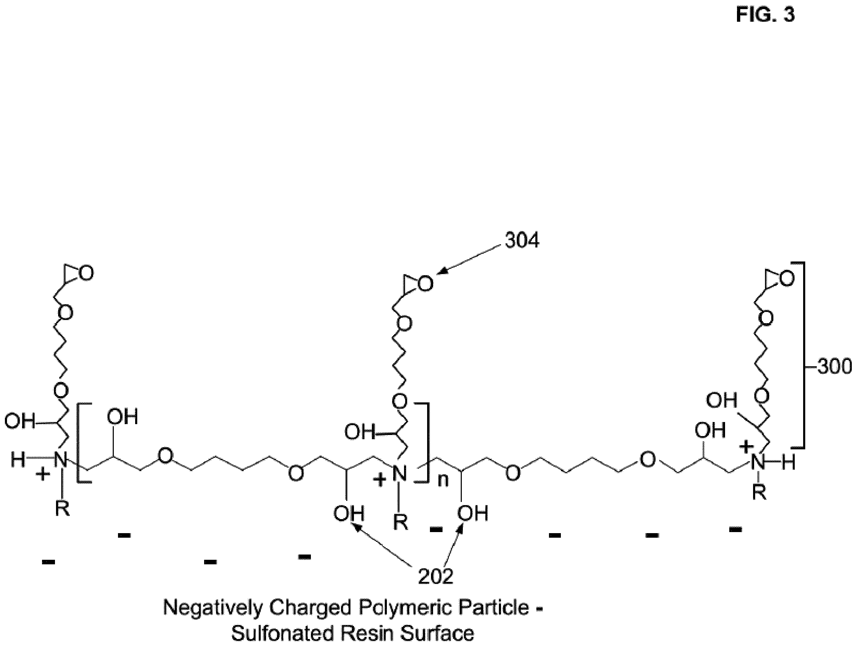

For the first step **a)** of a first cycle, alkyldiol diglycidyl ether can be reacted with base layer **200** to form a first polyepoxide condensation reaction product (CRP) **300** having pendant epoxide groups **304**, as illustrated in **Figure 3****.** In addition, the tertiary amines of base layer **200** are converted to quaternary ammonium groups that have a positive charge. It is worthwhile to note that such positive charges are believed to help base layer **200** to ionically bond to the negatively charged particles. After the quaternization of the amine of the base layer **200**, at least a portion of the hydroxy groups **202** are spaced from the quaternary ammonium groups by a two carbon spacer. The first polyepoxide CRP **300** can be covalently attached to the base condensation polymer **200**. The first polyepoxide CRP **300** includes a reaction product of **i)** an amine group of the base condensation polymer **200**, and **ii)** a second polyepoxide compound, in which the amine group of the base condensation polymer includes a positive charge so that the base condensation polymer **200** is ionically coupled to the negatively charged substrate particle.

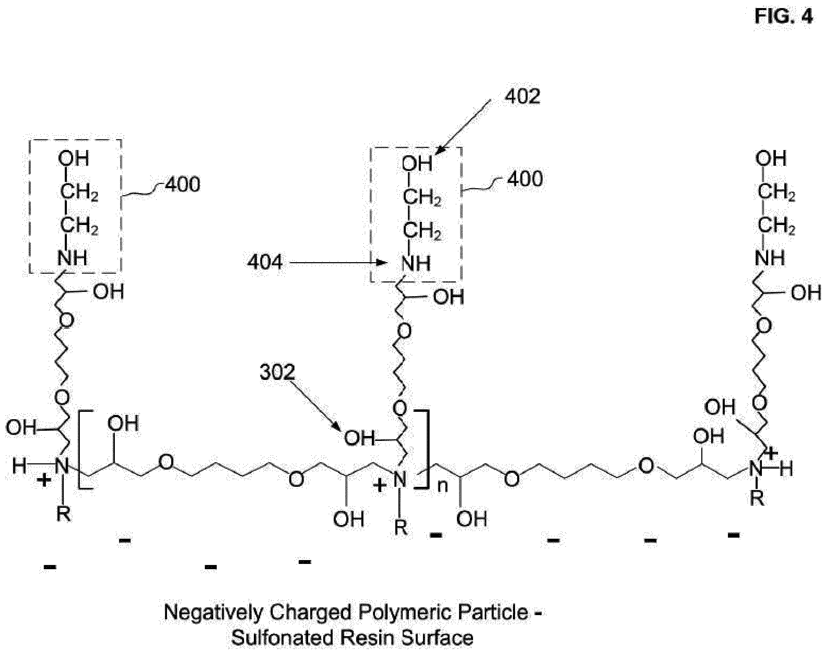

For a second step **b)** of the first cycle, the pendant epoxide groups **304** can be reacted with a first ethanolamine to form a first ethanolamine CRP **400**, as illustrated in **Figure 4****.** The first ethanolamine CRP **400** includes a secondary amine **404** and a pendant hydroxy compound **402**, as illustrated in **Figure 4****.** The first ethanolamine CRP **400** can be covalently attached to the first polyepoxide CRP **300**. The first ethanolamine CRP **400** includes a reaction product of **i)** an epoxide group **304** of the first polyepoxide CRP **300**, and **ii)** a first ethanolamine.

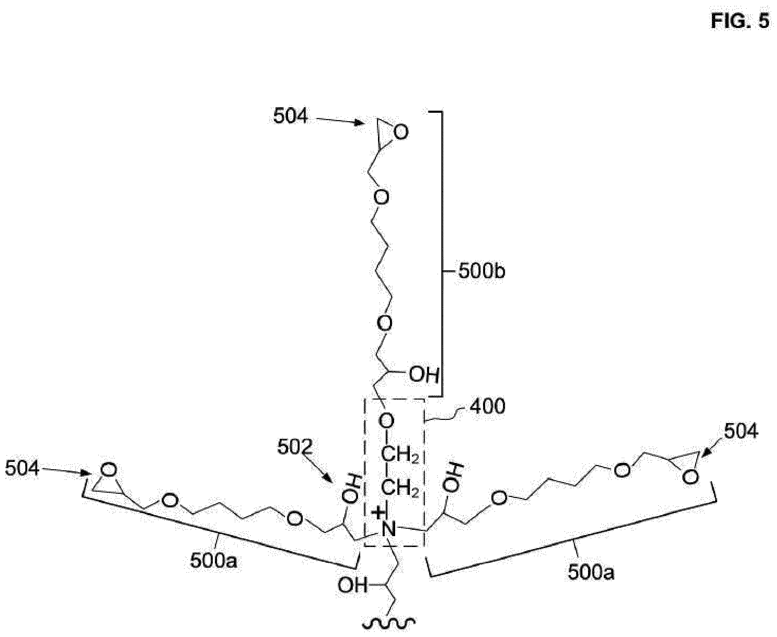

Now that one reaction cycle of two steps has been performed, a second cycle of two steps may be performed to create a hyperbranched structure. For a first step **a)** of a second cycle, the pendant hydroxy group **402** and the secondary amine compound **404** can be reacted with one alkyldiol diglycidyl ethers and two alkyldiol diglycidyl ethers, respectively, to form the second polyepoxide CRP **(500b** and **500a).** The second polyepoxide CRP **(500b** and **500a**) can be covalently attached to the first ethanolamine CRP **400**. The second polyepoxide CRP **(500b** and **500a**) includes a reaction product of **i)** an amine group **404** of the first ethanolamine CRP **400**, and **ii)** a third polyepoxide compound. Under certain circumstances, the second polyepoxide CRP **(500b** and **500a**) can further include a reaction product of **i)** a hydroxy group **402** of the first ethanolamine CRP **400**, and **ii)** a third polyepoxide compound. As illustrated in **Figure 5**, one pendant epoxide branch **500b** can be formed from the pendant hydroxy group **402** and two pendant epoxide branches **500a** can be formed from the secondary amine group **404**. In addition, the secondary amine **404** is converted to a quaternary ammonium group that has a positive charge. It should be noted that the reactivity of pendant hydroxy group **402** may be less than that of the secondary amine group **404** with the epoxy groups. Thus, the proportion of branch **500b** may be less than branch **500a.** Although **Figure 5** illustrates each diepoxide compound as only reacting with one of the two epoxide groups with first ethanolamine CRP **400**, it is possible for a proportion of diepoxide compounds to crosslink by reacting both of two epoxide groups with the first ethanolamine CRP **400**, or one epoxy group of the diepoxide with the first ethanolamine CRP **400** and the other epoxy group of the diepoxide with a different ethanolamine CRP **400**.

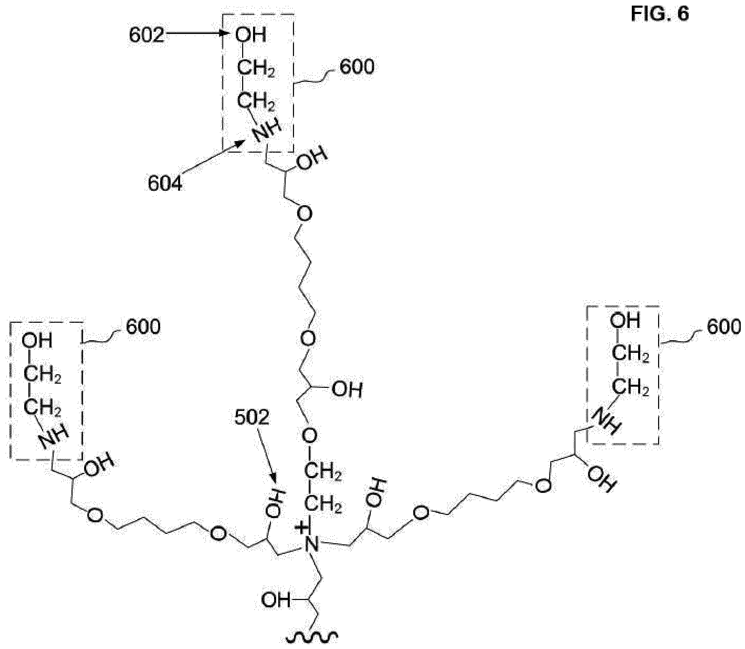

For a second step **b)** of the second cycle, the pendant epoxide groups **504** can then be reacted with a second ethanolamine to form a second ethanolamine CRP **600** that has a pendant hydroxy group **602** along with a secondary amine **604**, as illustrated in **Figure 6**. The second ethanolamine CRP **600** can be covalently attached to the second polyepoxide CRP (**500a and 500b**). The second ethanolamine CRP **600** includes a reaction product of **i)** an epoxide group **504** of the second polyepoxide CRP (**500a and 500b**), and **ii)** a second ethanolamine. Although **Figure 6** illustrates each ethanolamine compound as only reacting with one pendant epoxide group, it is possible for a proportion of the ethanolamine compounds to react with two different pendant epoxide groups causing a crosslink.

A third reaction cycle of two steps can be performed with the second ethanolamine CRP **600**. For a first step **a)** of a third cycle, the pendant hydroxy group **602** and the secondary amine compound **604** can be reacted with one alkyldiol diglycidyl ethers and two alkyldiol diglycidyl ethers, respectively, to form the third polyepoxide CRP (not shown). The third polyepoxide CRP can be covalently attached to the second ethanolamine CRP **600**. The third polyepoxide CRP includes a reaction product of **i)** an amine group of the second ethanolamine condensation reaction product, and **ii)** a fourth polyepoxide compound. It should be noted that the third polyepoxide CRP includes pendant epoxide groups and have a chemical structure analogous to the second polyepoxide CRP (**500a** and **500b** of **Figure 5**).

For a second step **b)** of the third cycle, the pendant epoxide groups of the third polyepoxide CRP can then be reacted with a third ethanolamine to form a third ethanolamine CRP (not shown). The third ethanolamine CRP can be covalently attached to the third polyepoxide condensation reaction product. The third ethanolamine CRP includes a reaction product of **i)** an epoxide group of the third polyepoxide condensation reaction product, and **ii)** a third ethanolamine. It should be noted that the third ethanolamine CRP would have a chemical structure analogous to the second ethanolamine CRP (**600** of **Figure 6**).

Similar to the third reaction cycle of two steps, a fourth reaction cycle can be performed with the third ethanolamine CRP. For a first step **a)** and a second step **b)** of the fourth cycle, the third ethanolamine CRP is reacted with alkyldiol diglycidyl ether and then a fourth ethanolamine to form a fourth polyepoxide CRP (not shown) and a fourth ethanolamine CRP (not shown). It should be noted that the fourth polyepoxide CRP and the ethanolamine CRP would have a chemical structure analogous to the second polyepoxide CRP (**500a** and **500b** of **Figure 5**) and the second ethanolamine CRP (**600** of **Figure 6**), respectively.

In an embodiment, an anion exchange stationary phase includes a base layer **200** that is reacted with at least about three to about ten reactions cycles of reagents (diepoxide and ethanolamine), and preferably about three to about four reactions cycles of reagents to form a crosslinked ethanolamine polymer layer. The crosslinked ethanolamine condensation polymer layer can be covalently attached to the base condensation polymer. The crosslinked ethanolamine condensation polymer layer includes quaternary ammonium groups, ether groups, and hydroxy groups, as illustrated in **Figures 3 to 6****.** At least a portion of the ether groups are spaced from the quaternary ammonium groups by a two carbon spacer. Similarly, at least a portion of the hydroxy groups are spaced from the quaternary ammonium groups by the first two carbon spacer.

Now that the crosslinked ethanolamine polymer layer has been formed, it can be reacted with a first glycidol and a second glycidol treatment to form the anion exchange stationary phase. In an embodiment, the first and second glycidol treatments can each include flowing a solution of the glycidol through the reaction column.

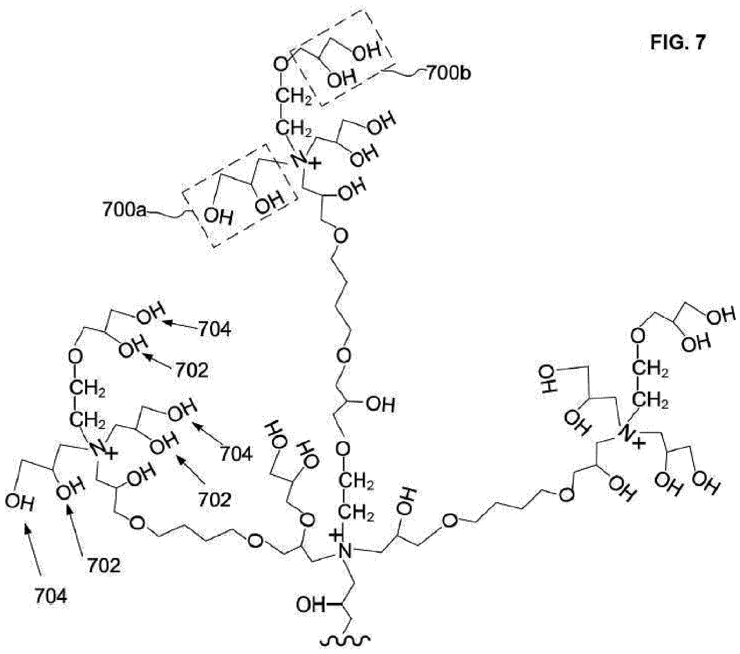

A pendant hydroxy group (e.g., **602**) and/or the secondary amine group (e.g., **604**) of an ethanolamine CRP (e.g., **600** of **Figure 6**) can be reacted with an epoxide portion of a first glycidol to form a first glycidol CRP (**700b** and **700a**), as illustrated in **Figure 7****.** The first glycidol CRP (**700b** and **700a**) can be covalently attached to the third ethanolamine condensation product. The first glycidol CRP (**700b** and **700a**) includes a reaction product of **i)** an amine of the third ethanolamine CRP, and **ii)** a first glycidol. One pendant dihydroxy group branch **700b** can be formed from the pendant hydroxy group (e.g., **602**) and two pendant dihydroxy group branches **700a** can be formed from the secondary amine group (e.g., **604**). In addition, the secondary amine (e.g., **604**) is converted to a quaternary ammonium group that has a positive charge. It should be noted that hydroxy groups (e.g, **502**) that are spaced apart from a quaternary ammonium group with a two carbon spacer can be referred to as a beta hydroxy group. As illustrated in **Figure 7**, beta hydroxy groups (e.g., **502**) can be reactive with epoxy groups of glycidol to form additional dihydroxy group branches.

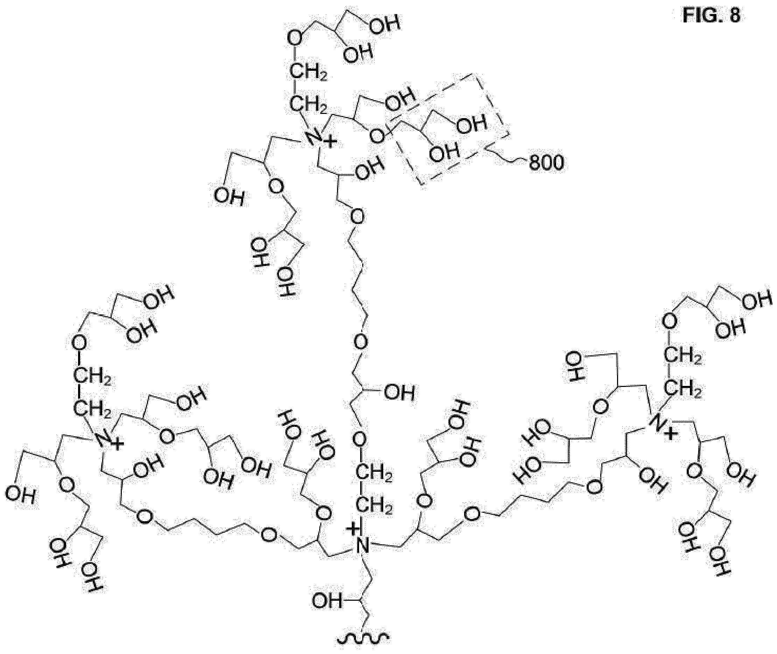

To generate even more dihydroxy groups in the anion exchange resin, a second glycidol treatment can be used. **Figure 8** illustrates beta hydroxy groups **702** being reacted with a second glycidol to form a second glycidol CRP **800**. The second glycidol CRP **800** can be covalently attached to the first glycidol CRP (**700a and 700b**). The second glycidol CRP **800** includes a reaction product of **i)** a hydroxy group (**702 or 704**) of the first glycidol CRP, in which a portion of the hydroxy groups **702** of the first glycidol CRP is spaced from a quaternary ammonium group of the third ethanolamine condensation reaction product by a two carbon spacer; and **ii)** a second glycidol. It should be noted that the crosslinked ethanolamine polymer can be treated with a hydroxide solution before each of the first and second glycidol treatments. Such hydroxide solution treatments can deprotonate the beta hydroxy groups to enhance the reactivity with glycidol. It should be noted that the squiggle in **Figures 5 to 8** can represent adjacent chemical moieties such as, for example, the base condensation polymer **200** and the first polyepoxide CRP **300**.

In an embodiment, the crosslinked ethanolamine polymer layer can be reacted with two to ten, and preferably two to four sequential glycidol treatments to form a glycidol condensation layer that is covalently attached to the crosslinked ethanolamine condensation polymer layer. The glycidol condensation layer includes a plurality of dihydroxy groups, in which each dihydroxy group includes a first hydroxy group **702** and a second hydroxy group **704**. The first hydroxy **702** is spaced from the second hydroxy **704** by the first two carbon spacer. At least a portion of the first hydroxy groups **702** is spaced from the quaternary ammonium groups of the crosslinked ethanolamine condensation polymer layer by the first two carbon spacer.

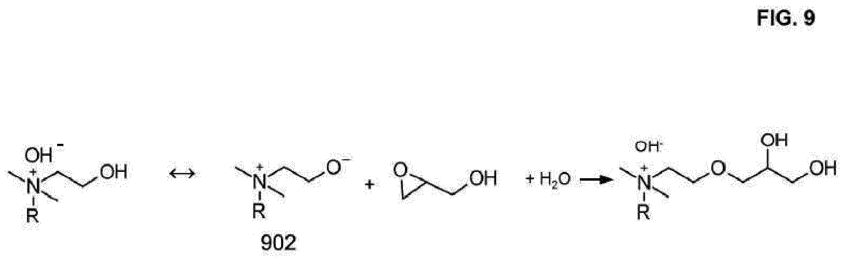

In an embodiment, the hydroxyalkylamine can be in the form of ethanolamine **106** having a two carbon spacer (e.g., alkyl) with a terminal hydroxy group and terminal amine group. It should be noted that the hydroxy groups **202** and **302** (see **Figures 3** **and** **4**) are both spaced apart from a quaternary ammonium group by a two carbon spacer, which makes the hydroxy groups **202** and **302** more acidic. Hydroxy groups separated from the quaternary ammonium group anion exchange site by a two carbon spacer (may be referred to as a beta position or a beta hydroxy group) are more acidic than hydroxy groups spaced apart by a three carbon spacer (gamma position), a four carbon spacer (delta position), or farther relative to the quaternary ammonium group anion exchange site. The pKa of a beta hydroxy group is believed to be about 13.9, which makes it about 100 times more acidic than a hydroxy group not close to a quaternary ammonium group. As an example, a model compound choline can be used to illustrate the increased acidity of a beta hydroxy group with respect to a quaternary ammonium group. The hydroxy group of choline has a pKa of 13.9, which is much lower than ethanol, which does not have a proximate quaternary ammonium group. The hydroxy group of ethanol has a pKa of 15.9. As illustrated in **Figure 9**, the deprotonated and negatively charged beta hydroxy group is stabilized by the proximate positive charge of the quaternary ammonium group, and thus, results in an increased acidity. The deprotonated hydroxy group can act as a stronger reactant for opening the epoxide ring of a glycidol group.

It is worthwhile to note that the glycidol treatments reduces the population of beta hydroxide groups in the ion exchange resin, and thus, alters the anion binding characteristics of the anion exchange resin. During an anion chromatographic separation, a hydroxide eluent is typically used. When the pH of the hydroxide eluent is sufficiently high, the beta hydroxide can be deprotonated causing the ion exchange site to form a zwitterionic ion pair **902** (see e.g., **Figure 9**), which decreases the anion binding of the resin. Zwitterionic ion pair **902** has a positively charged quaternary ammonium group that is stabilized by the negatively charged and deprotonated hydroxy group. The proximity of the positively charged quaternary ammonium group and the deprotonated hydroxy group form a relatively stable zwitterionic pair that reduces the anion binding strength of the quaternary ammonium group. Thus, the anion binding capability of anion exchange resins can be tuned based on the concentration (or pH) of the hydroxide eluent.

### Example 1 - Synthesis of the Anion exchange Resin with Crosslinked Ethanolamine

A 9 × 250 mm (diameter × length) reaction column was packed with 6.5 µm diameter particles with surface sulfonated (one hour at room temperature) 20.8 m²/g wide-pore resin (DVB/EVB). The base condensation layer was applied to a packed column by flowing a butanediol diglycidyl ether-methylamine solution mixture (10% (wt/wt%) with respect to butanediol diglycidyl ether: 4% (wt/wt %) with respect to methylamine) at 0.5 mL/minute through the column at 68° C for 60 minutes to form a base condensation polymer **200** (see **Figure 2**). Unless otherwise specified, the reagent solutions are prepared in deionized water. Next, 4 cycles of reagent treatment were flowed at 0.5 mL/minute through the column at 68° C. A single cycle of reagent treatment included a first step **a)** 10% (wt/wt %) butanediol diglycidyl ether solution was flowed through the column for 30 minutes to form a first diepoxide condensation reaction product **300** (see **Figure 3**), a second step **b)** deionized water was flowed the column for 10 minutes, a third step **c)** 7.88% (wt/wt %) ethanolamine solution was flowed through column for 30 minutes to form a first ethanolamine condensation reaction product **400** (see **Figure** 4), and a fourth step **d)** deionized water was flowed the column for 10 minutes. After completing the first cycle of reagent treatment (steps **a)** to **d)**), three additional cycles of reagent treatment were performed.

### Example 2 - Glycidol Treatment of the Anion exchange Resin with Crosslinked Ethanolamine in the Chromatography Column

The anion exchange resin with crosslinked ethanolamine was removed from the reaction column into a container. 400 grams of 1 M NaOH was mixed with 20 grams of the anion exchange resin (1:20 ratio of resin to 1M NaOH, wt/wt %) in the container. The mixture was then sonicated to disperse the resin particles at room temperature for 60 minutes and then sieved and filtered. Next, the filter cake was washed with deionized water. The resulting filter cake formed a cleaned-up resin that was packed into 2 × 250 mm chromatography columns.

The following solutions were flowed into the 2 × 250 mm packed chromatography columns at 0.1 mL/min. In step **1)**, deionized water was flowed for 5 minutes at 68° C. In step **2)**, 20% glycidol solution was flowed for 60 minutes at 68° C to form the first glycidol condensation reaction product (e.g., **700a** and **700b** of **Figure 7**). In step **3)**, deionized water was flowed for 5 minutes at 68° C. In step **4)**, 0.1 M NaOH was flowed at room temperature for 25 minutes. In step **5)**, deionized water was flowed for 5 minutes at 68° C. In step **6)**, 20% glycidol solution was flowed for 60 minutes at 68° C to form the second glycidol condensation reaction product (see **800** of **Figure 8**). In step **8)**, deionized water was flowed for 5 minutes at 68° C.

### Example 3 - Glycidol Treatment of the Anion exchange Resin with Crosslinked Ethanolamine in the Reaction Column

The following solutions were flowed solution at 0.5 mL/minute into the 9 × 250 mm reaction column of **Example 1** containing anion exchange resin with crosslinked ethanolamine. In step **1)**, 0.1 M NaOH was flowed at room temperature for 30 minutes. In step **2)**, deionized water was flowed for 10 minutes at 68° C. In step **3)**, 20% glycidol solution was flowed for 60 minutes at 68° C to form the first glycidol condensation reaction product (e.g., **700a** and **700b** of **Figure 7**). In step **4)**, deionized water was flowed for 10 minutes at 68° C. In step **5)**, 0.1 M NaOH was flowed at 68° C for 20 minutes. In step **6)**, deionized water was flowed for 10 minutes at 68° C. In step **7)**, 20% glycidol solution was flowed for 60 minutes at 68° C to form the second glycidol condensation reaction product (see **800** of **Figure 8**). In step **8)**, deionized water was flowed for 10 minutes at 68° C. In step **9)**, the anion exchange resin from the reaction column was removed into a container. In step **10)**, 400 grams of 1 M NaOH was mixed with 20 grams of the anion exchange resin (1:20 ratio of resin to 1M NaOH, wt/wt %) in the container, sonicated to disperse the resin particles at room temperature for 60 minutes, and then sieved and filtered. In step **11)**, the filter cake was washed with deionized water. The resulting filter cake formed a cleaned-up resin that was packed into 2 × 250 mm chromatography columns.

### Example 4 - Chromatogram of Standard Solution Containing Various Haloacetic Acids and Common Inorganic

A chromatography column of was installed into a Thermo Scientific Dionex ICS-5000⁺ ion chromatography system (commercially available from Thermo Fisher Scientific, Sunnyvale, California). Three commercially available chromatography columns were used in the ion chromatography system (Thermo Scientific^{™} Dionex^{™} IonPac^{™} AS24, AS24A, and AS26). IonPac AS24, AS24A, and AS26 are anion exchange stationary phases that each includes a hyperbranched anion-exchange condensation polymer, electrostatically attached to the surface of a sulfonated wide-pore polymeric substrate. IonPac AS26 has alkanol quaternary ammonium functional groups and includes alternating treatments of epoxy monomer and methylamine to produce a coating that grows directly off of the substrate surface. In addition, the chromatography column of **Examples 3** was also used. A pump was used to pump deionized water into a Thermo Scientific Dionex EGC 500 KOH cartridge (Thermo Fisher Scientific, Sunnyvale, California) for generating a KOH gradient, which was different for each column type. The KOH gradient was optimized for each column to separate sulfate and phosphate from neighboring peaks. A temperature regulator was used to maintain a column temperature of 15 °C. A Dionex AERS 500 suppressor was used along with a Thermo Scientific conductivity detector. **Table 1** lists the relevant chromatographic system conditions for each type of chromatography column tested such as flow rate, injection volume, the gradient elution parameters, the suppressor format (for corresponding tubing diameter of the system), and applied current to the suppressor.

**Table 1.**

| **Column Type** | **Flow Rate (mL/min)** | **Injection Volume (µL)** | **Time (minutes)** | **KOH Concentration (mM)** | **AERS Format (mm) / Current (mA)** |
|---|---|---|---|---|---|
| IonPac AS24 | 0.25 | 2.5 | 0-7 | 5 | 2 / 56 |
| | | | 7-16 | 5-25 | |
| | | | 16-27 | 25-90 | |
| | | | 27-45 | 90 | |
| IonPac AS24A | 0.25 | 2.5 | 0-7 | 5 | 2 / 45 |
| | | | 7-15 | 5-35 | |
| | | | 15-30 | 35-45 | |
| | | | 30-50 | 45 | |
| IonPac AS26 | 1.0 | 10 | 0-7 | 5 | 4 / 223 |
| | | | 7-16 | 5-35 | |
| | | | 16-25 | 35-90 | |
| | | | 25-60 | 90 | |
| Example 3 | 0.25 | 2.5 | 0-7 | 5 | 2 / 35 |
| | | | 7-16 | 5-25 | |
| | | | 16-23 | 25-55 | |
| | | | 23-40 | 55 | |

The chromatograms were run using a standard solution that contains the anions listed in **Table 2** below.

**Table 2**

| **Peak No.** | **Anion** | **mg/L** |
|---|---|---|
| 1 | Fluoride | 2.0 |
| 2 | Monochloroacetate | 10.0 |
| 3 | Chlorite | 10.0 |
| 4 | Monobromoacetate | 10.0 |
| 5 | Bromate | 20.0 |
| 6 | Chloride | 5.0 |
| 7 | Dichloroacetate | 30.0 |
| 8 | Sulfate | 20.0 |
| 9 | Dibromoacetate | 30.0 |
| 10 | Nitrite | 15.0 |
| 11 | Phosphate | 30.0 |
| 12 | Chlorate | 20.0 |
| 13 | Bromide | 20.0 |
| 14 | Trichloroacetate | 30.0 |
| 15 | Nitrate | 20.0 |
| 16 | Tribromoacetate | 30.0 |

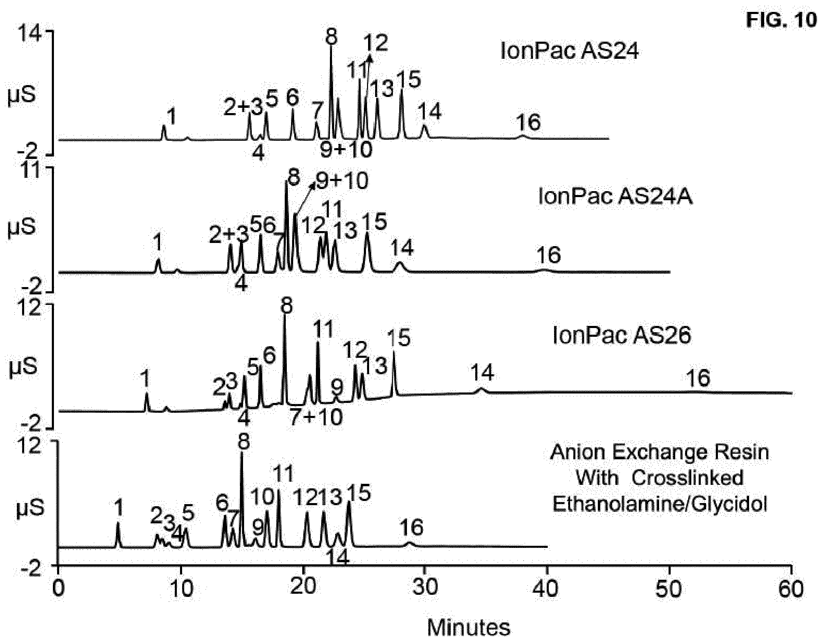

**Figure 10** illustrates four chromatograms of the standard solution using four different anion exchange resins, which are Thermo Scientific Dionex IonPac chromatography columns AS24, AS24A, AS26, and the column of **Example 3** (in order from top to bottom). The chromatogram with the column containing crosslinked ethanolamine with glycidol treatments illustrated a shorter chromatographic run time (under 30 minutes) while partially resolving monochloroacetate and chlorite (peaks 2 and 3), and resolving dibromoacetate and nitrite (peaks 9 and 10). In contrast, the chromatograms run with IonPac AS24, AS24A, or AS26 required about 10 minutes or more run time to elute tribromoacetate (peak 16), and the three commercial columns failed to provide at least partial resolution for all of the haloacetic acids from important inorganic anions (e.g., nitrite - peak 10). In addition, the chromatograms run with IonPac AS24 and AS26 required higher eluent concentration than the column of **Example 3.**

### Example 5 - Chromatograms of the Standard Solution Containing Various Common Inorganic Anions Comparing Glycidol Treatment In Chromatography Column (Example 2) to Glycidol Treatment In Reaction Column (Example 3)

An ion chromatography system similar to **Example 4** was employed with isocratic elution using a KOH eluent and a standard solution of common inorganic anions. The standard solution contained nine anions, which were fluoride 2.0 mg/L, chlorite 10.0 mg/L, bromate 20.0 mg/L, chloride 5.0 mg/L, sulfate 20.0 mg/L, nitrite 15.0 mg/L, chlorate 20.0 mg/L, bromide 20.0 mg/L, and nitrate 20.0 mg/L. A first chromatogram was performed using the column of **Example 2** with 9 mM KOH eluent at 0.25 mL/min. A second chromatogram was performed using the column of **Example 3** with 9 mM KOH eluent at 0.25 mL/min. Due to the co-eluting peaks of sulfate and nitrite, a third chromatogram was performed using the column of **Example 3** with a higher 12 mM KOH eluent at 0.25 mL/min to separate sulfate and nitrite, so number of plates and asymmetry for sulfate can be measured accurately. The data from the first, second, and third chromatogram were shown in **Table 3** below.

**Table 3.**

| | Retention Time (minute) | Plates (EP) | Asymmetry (AIA) | Plates (EP) | Asymmetry (AIA) | Column Pressure (PSI) | KOH Eluent Concentration (mM) | Flow Rate (mL/min) | Comments |
|---|---|---|---|---|---|---|---|---|---|
| Column | Nitrate | Bromide | Bromide | Sulfate | Sulfate | | | | |
| First Chromatogram with Column of Example 2 | 37.13 | 4334 | 1.4 | 3259 | 127 | 2170 | 9 | 0.25 | Glycidol Treatment In Chromatography Column |
| Second Chromatogram with Column of Example 3 | 35.75 | 6439 | 1.14 | n/a | n/a | 2212 | 9 | 0.25 | Glycidol Treatment In Reaction Column |
| Third Chromatogram with Column of Example 3 | 20.02 | 6859 | 1.1 | 5769 | 0.99 | 2197 | 12 | 0.25 | Glycidol Treatment In Reaction Column |

The second chromatogram showed an improvement in the number of plates and asymmetry for bromide compared to the first chromatogram (from 4334 to 6439 plates, and from 1.4 to 1.14). The third chromatogram showed an improvement in the number of plates and asymmetry for sulfate compared to the first chromatogram (from 3259 to 5769 plates, and from 1.27 to 0.99). This chromatography column of **Example 3** demonstrates that adding glycidol to the reaction column improves the subsequent packing of the chromatography columns, and results in a higher plate count and lower asymmetry compared to removing the ion exchange resin from the reaction column and then packing the chromatography column that is subsequently reacted with glycidol, as described in **Example 2.**

### Example 6 - Chromatograms Using Anion Exchange Resins with Smaller Particles.

Anion exchange resins were synthesized in manner similar to **Example 1** except that three different types of particles were used in the synthesis to create three different resins, which were referred to as **A** (4.75 micron diameter, 26.3 m²/g, 4 hour at 80 °C sulfonation), **B** (4.55 micron diameter, 27.6 m²/g, 4 hour at 80 °C sulfonation), and C (4.6 micron diameter, 17.4 m²/g, 1 hour at room temperature sulfonation). In general, the particles used in **Example 6** were smaller than **Example 1,** had different surface areas, and varying levels of sulfonation. The anion exchange resins of **Example 6** were then treated in a manner similar to **Example 3** except that a shorter 2 × 150 mm chromatography column was used to further accelerate the chromatographic separation. The chromatography columns of **Example 6** was tested in an ion chromatography system similar to **Example 4. Table 4** lists the relevant chromatographic system conditions for this example such as flow rate, injection volume, the gradient elution parameters, the suppressor format (for corresponding tubing diameter of the system), and applied current to the suppressor.

**Table 4.**

| **Column Type** | **Flow Rate (mL/min)** | **Injection Volume (µL)** | **Time (minutes)** | **KOH Concentration (mM)** | **AERS Format (mm) / Current (mA)** |
|---|---|---|---|---|---|
| **A, B,** or **C** of **Example 6** | 0.25 | 2.5 | 0-4 | 5 | 2/31 |
| | | | 4-9 | 5-25 | |
| | | | 9-15 | 25-90 | |
| | | | 15-25 | 90 | |

The chromatograms were run using a standard solution that contains the anions listed in **Table 5** below.

**Table 5.**

| **Peak No.** | **Anion** | **mg/L** |
|---|---|---|
| 1 | Fluoride | 2.0 |
| 2 | Monochloroacetate | 10.0 |
| 3 | Monobromoacetate | 10.0 |
| 4 | Bromate | 20.0 |
| 5 | Chloride | 5.0 |
| 6 | Dichloroacetate | 30.0 |
| 7 | Sulfate | 20.0 |
| 8 | Dibromoacetate | 30.0 |
| 9 | Nitrite | 15.0 |
| 10 | Phosphate | 30.0 |
| 11 | Chlorate | 20.0 |
| 12 | Bromide | 20.0 |
| 13 | Trichloroacetate | 30.0 |
| 14 | Nitrate | 20.0 |
| 15 | Tribromoacetate | 30.0 |

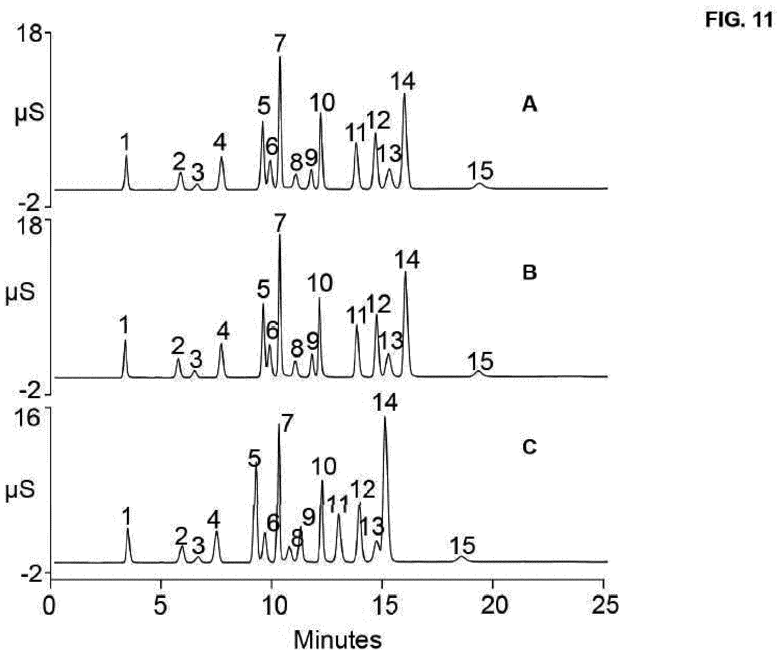

**Figure 11** illustrates three chromatograms that separated a standard solution listed in **Table 5** using three different anion exchange resins, which are represented as **A, B,** and **C** of this **Example** 6. In contrast to **Example 4**, the chromatograms run with anion exchange resins **A, B,** and **C** using a smaller particle size had faster run times of about 20 minutes with along with good separation. In general the chromatographic run times of **Example 6** were about 10 minutes faster (50%) compared to the chromatographic run times of **Example 4** (see **Figure 10**).

### Example 7 - Chromatograms of Standard Solution Containing Nine Haloacetic Acid and Common Inorganic Anions

Anion exchange resins **A** and **C** of **Example 6** was tested in an ion chromatography system similar to **Example 4. Table 6** lists the relevant chromatographic system conditions for this example such as flow rate, injection volume, the gradient elution parameters, the suppressor format (for corresponding tubing diameter of the system), and applied current to the suppressor.

**Table 6.**

| **Column Type** | **Flow Rate (mL/min)** | **Injection Volume (µL)** | **Time (minutes)** | **KOH Concentration (mM)** | **AERS Format (mm) / Current (mA)** |
|---|---|---|---|---|---|
| **A** of **Example 6** | 0.25 | 2.5 | 0-4 | 4 | 2 / 28 |
| | | | 4-10 | 4-15 | |
| | | | 10-15 | 15-45 | |
| | | | 15-25 | 45 | |
| **C** of **Example 6** | 0.25 | 2.5 | 0-4 | 4 | 2 / 28 |
| | | | 4-10 | 4-18 | |
| | | | 10-15 | 18-45 | |
| | | | 15-25 | 45 | |

The chromatograms were run using a standard solution that contains 9 haloacetic acids along with common inorganic anions listed in **Table 7** below.

**Table 7.**

| **Peak No.** | **Anion** | **mg/L** |
|---|---|---|
| 1 | Fluoride | 1.0 |
| 2 | Monochloroacetate | 10.0 |
| 3 | Chlorite | 10.0 |
| 4 | Monobromoacetate | 10.0 |
| 5 | Bromate | 5.0 |
| 6 | Chloride | 1.5 |
| 7 | Dichloroacetate | 10.0 |
| 8 | Bromochloroacetate | 10.0 |
| 9 | Sulfate | 5.0 |
| 10 | Dibromoacetate | 10.0 |
| 11 | Phosphate | 10.0 |
| 12 | Chlorate | 5.0 |
| 13 | Bromide | 5.0 |
| 14 | Trichloroacetate | 10.0 |
| 15 | Nitrate | 5.0 |
| 16 | Bromodichloroacetate | 10.0 |
| 17 | Chlorodibromoacetate | 10.0 |
| 18 | Tribromoacetate | 10.0 |

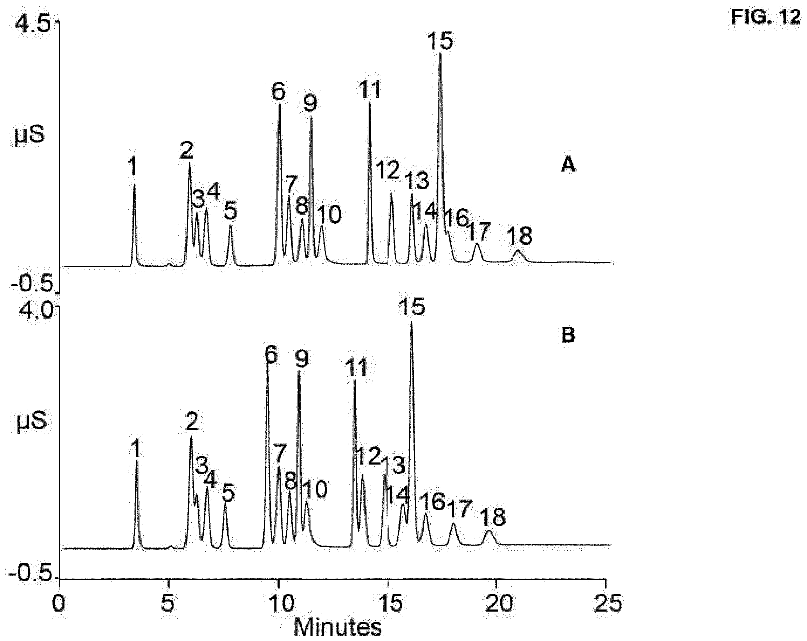

**Figure 12** illustrates two chromatograms that separated the standard solution listed in **Table 7** using anion exchange resins **A** and **C** of **Example 6.** In general, the chromatograms using **A** and **C** of **Example 6** show the feasibility of resolving all 18 analytes of **Table 7.** Although a few of the peaks are not completely baseline resolved, Applicant believes that one or more minor adjustments such as adjusting the number of reaction cycles that form the crosslinked ethanolamine polymer layer, the number of glycidol treatments, adjusting the reaction temperature, lengthening the column, adjusting the elution gradient, and chromatographic run temperature will allow all of the peaks to be resolved in a single chromatographic run. It should be noted that not only were the chromatograms performed relatively quickly at about 20 minutes for a sample having 18 analytes of haloacetic acids and common inorganic anions, but that the eluent concentration was relatively low at less than or equal to 45 mM KOH.

While preferred embodiments of the present invention have been shown and described herein, it will be apparent to those skilled in the art that such embodiments are provided by way of example only. Numerous variations, changes, and substitutions will now occur to those skilled in the art without departing from the invention. While the invention has been described in terms of particular variations and illustrative figures, those of ordinary skill in the art will recognize that the invention is only limited by the appended claims.

## Claims

1. An anion exchange stationary phase comprising:
**a)** a negatively charged substrate particle;
**b)** a base condensation polymer layer attached to the negatively charged substrate particle, the base condensation polymer layer comprises:
**i)** quaternary ammonium groups;
**ii)** ether groups; and
**iii)** hydroxy groups, in which at least a portion of the hydroxy groups are spaced from the quaternary ammonium groups by a first two carbon spacer and the base condensation polymer layer is formed from methylamine and 1,4-butanediol diglycidyl ether;
**c)** a crosslinked ethanolamine condensation polymer layer covalently attached to the base condensation polymer layer, the crosslinked ethanolamine condensation polymer layer comprises:
**i)** quaternary ammonium groups;
**ii)** ether groups, in which at least a portion of the ether groups are spaced from the quaternary ammonium groups by a second two carbon spacer;
and
**iii)** hydroxy groups, in which at least a portion of the hydroxy groups are spaced from the quaternary ammonium groups by the first two carbon spacer;
and
**d)** a glycidol condensation layer covalently attached to the crosslinked ethanolamine condensation polymer layer, the glycidol condensation layer comprises: a plurality of dihydroxy groups, in which each dihydroxy group includes a first hydroxy group and a second hydroxy group, and the first hydroxy is spaced from the second hydroxy by the first two carbon spacer, in which at least a portion of the first hydroxy groups are spaced from the quaternary ammonium groups of the crosslinked ethanolamine condensation polymer layer by the first two carbon spacer.

2. The anion exchange stationary phase of **claim 1**, in which the negatively charged substrate particle comprises a crosslinked divinylbenzene and ethylvinyl benzene particle, in which at least a surface of the negatively charged substrate particle includes sulfonate groups.

3. The anion exchange stationary phase of **claim 1 or claim 2**, in which the base condensation polymer layer is positively charged and ionically attached to the negatively charged substrate particle.

4. The anion exchange stationary phase of **any of the preceding claims,** in which the first two carbon spacer comprises a chemical formula of 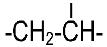 and the second two carbon spacer comprises a chemical formula of

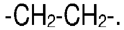

5. A method of forming an anion exchange stationary phase comprising:
reacting 1,4-butanediol diglycidyl ether with methylamine to form a base condensation polymer layer on a negatively charged substrate particle;
reacting the base condensation polymer layer in a number of reaction cycles to form a crosslinked ethanolamine polymer layer, in which the number of reaction cycles ranges from about three to about ten and each reaction cycle includes a polyepoxide treatment followed by an ethanolamine treatment; and
reacting the crosslinked ethanolamine polymer layer with a first glycidol and then a second glycidol to form the anion exchange stationary phase.

6. The method of **claim 5,** which further comprises: treating the crosslinked ethanolamine polymer layer with a hydroxide solution before each of the first glycidol treatment and the second glycidol treatment.

7. The method of **claim 5 or claim 6,** in which the negatively charged substrate particles are contained as a packed bed in a first column, in which the reacting of 1,4-butanediol diglycidyl ether with methylamine comprises: flowing a solution of 1,4-butanediol diglycidyl ether and methylamine through the first column to form the base condensation polymer layer on the negatively charged substrate particles.

8. The method of **claim 7,** in which the polyepoxide treatment comprises: flowing a solution of the polyepoxide through the first column; and the ethanolamine treatment comprises: flowing a solution of the ethanolamine through the first column.

9. The method of any of **claims 5 to 8,** in which the first glycidol treatment and the second glycidol treatment each comprise: flowing a solution of the glycidol through the first column.

10. The method of any of **claims 5 to 9,** in which the number of reaction cycles ranges from about 3 to about 4.

11. The method of any of **claims 5 to 10,** in which the negatively charged substrate particle comprises a crosslinked divinylbenzene and ethylvinyl benzene particle, in which at least a surface of the negatively charged substrate particle includes sulfonate groups,and in which the base condensation polymer layer is positively charged and ionically attached to the negatively charged substrate particle..

12. The method of any of **claims 5 to 11,** in which the polyepoxide comprises 1,4-butanediol diglycidyl ether.

13. Use of an anion exchange stationary phase according to claim 1 for separating haloacetic acids in the presence of inorganic anions.

14. Use according to claim 13 of an anion exchange stationary phase, the use comprising:
flowing an eluent through a chromatography column, the chromatography column containing the anion exchange stationary phase, in which the eluent includes a hydroxide; and
preferably wherein the method further comprises:
separating at least one analyte from a sample injected into the chromatography column.

## Patentansprüche

1. Stationäre Anionenaustauschphase, umfassend:
a) ein negativ geladenes Substratteilchen;
b) eine Basiskondensationspolymerschicht, die an das negativ geladene Substratteilchen gebunden ist, wobei die Basiskondensationspolymerschicht umfasst:
i) quaternäre Ammoniumgruppen;
ii) Ethergruppen, und
iii) Hydroxygruppen, bei denen wenigstens ein Teil der Hydroxygruppen von den quaternären Ammoniumgruppen durch einen ersten Zwei-Kohlenstoff-Spacer beabstandet ist, und die Basiskondensationspolymerschicht aus Methylamin und 1,4-Butandioldiglycidylether ausgebildet ist,
c) eine vernetzte Ethanolkondensationspolymerschicht, die kovalent an die Basiskondensationspolymerschicht gebunden ist, wobei die vernetzte Alkoholkondensationspolymerschicht umfasst:
i) quaternäre Ammoniumgruppen;
ii) Ethergruppen, in denen wenigstens ein Teil der Ethergruppen von den quaternären Ammoniumgruppen durch einen zweiten Zwei-Kohlenstoff-Spacer beabstandet ist,
und
iii) Hydroxygruppen, bei denen wenigstens ein Teil der Hydroxygruppen durch den ersten Zwei-Kohlenstoff-Spacer von den quaternären Ammoniumgruppen beabstandet ist,
und
d) eine Glycidolkondensationsschicht, die kovalent an die vernetzte Ethanolkondensationspolymerschicht gebunden ist, wobei die Glycidolkondensationsschicht umfasst: eine Vielzahl von Dihydroxygruppen, in denen jede Dihydroxygruppe eine erste Hydroxygruppe und eine zweite Hydroxygruppe beinhaltet, und das erste Hydroxy von dem zweiten Hydroxy durch den ersten Zwei-Kohlenstoff-Spacer beabstandet ist, wobei wenigstens ein Abschnitt der ersten Hydroxygruppen von den quaternären Ammoniumgruppen der vernetzten Ethanolkondensationspolymerschicht durch den ersten Zwei-Kohlenstoff-Spacer beabstandet ist.

2. Stationäre Anionenaustauschphase nach Anspruch 1, wobei das negativ geladene Substratteilchen ein vernetztes Divinylbenzol- und Ethylvinylbenzolteilchen umfasst, wobei wenigstens eine Oberfläche des negativ geladenen Substratteilchens Sulfonatgruppen einschließt.

3. Stationäre Anionenaustauschphase nach Anspruch 1 oder Anspruch 2, wobei die Basiskondensationspolymerschicht positiv geladen und an das negativ geladene Substratteilchen ionisch gebunden ist.

4. Stationäre Anionenaustauschphase nach einem der vorstehenden Ansprüche, wobei der erste Zwei-Kohlenstoff-Spacer eine chemische Formel umfasst von 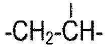 und der zweite Zwei-Kohlenstoff-Spacer eine chemische Formel umfasst von

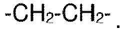

5. Verfahren zum Bilden einer stationären Anionenaustauschphase, umfassend:
Umsetzen von 1,4-Butandioldiglycidylether mit Methylamin, um eine Basiskondensationspolymerschicht auf einem negativ geladenen Substratteilchen auszubilden;
Umsetzen der Basiskondensationspolymerschicht in einer Anzahl von Reaktionszyklen, um eine vernetzte Ethanolaminpolymerschicht auszubilden, wobei die Anzahl von Umsetzungszyklen im Bereich von etwa drei bis etwa zehn liegt und jeder Umsetzungszyklus eine Polyepoxidbehandlung gefolgt von einer Ethanolaminbehandlung beinhaltet; und
Umsetzen der vernetzten Ethanolaminpolymerschicht mit einem ersten Glycidol und dann einem zweiten Glycidol, um die stationäre Anionenaustauschphase auszubilden.

6. Verfahren nach Anspruch 5, das ferner umfasst: Behandeln der vernetzten Ethanolaminpolymerschicht mit einer Hydroxidlösung vor jeder von der ersten Glycidolbehandlung und der zweiten Glycidolbehandlung.

7. Verfahren nach Anspruch 5 oder 6, wobei die negativ geladenen Substratteilchen als gepacktes Bett in einer ersten Säule enthalten sind, wobei die Reaktion von 1,4-Butandioldiglycidylether mit Methylamin umfasst: Fließenlassen einer Lösung von 1,4-Butandioldiglycidylether und Methylamin durch die erste Säule, um die Basiskondensationspolymerschicht auf den negativ geladenen Substratteilchen auszubilden.

8. Verfahren nach Anspruch 7, wobei die Polyepoxidbehandlung umfasst: Fließenlassen einer Lösung des Polyepoxids durch die erste Säule; und die Ethanolaminbehandlung umfasst: Fließenlassen einer Lösung des Ethanolamins durch die erste Säule.

9. Verfahren nach einem der Ansprüche 5 bis 8, wobei die erste Glycidolbehandlung und die zweite Glycidolbehandlung jeweils umfassen: Fließenlassen einer Lösung des Glycidols durch die erste Säule.

10. Verfahren nach einem der Ansprüche 5 bis 9, wobei die Anzahl von Umsetzungszyklen im Bereich von ungefähr 3 bis ungefähr 4 liegt.

11. Verfahren nach einem der Ansprüche 5 bis 10, wobei das negativ geladene Substratteilchen ein vernetztes Divinylbenzol- und Ethylvinylbenzolteilchen umfasst, wobei wenigstens eine Oberfläche des negativ geladenen Substratteilchens Sulfonatgruppen beinhaltet,und wobei die Basiskondensationspolymerschicht positiv geladen ist und an das negativ geladene Substratteilchen ionisch gebunden ist.

12. Verfahren nach einem der Ansprüche 5 bis 11, wobei das Polyepoxid 1,4-Butandioldiglycidylether umfasst.

13. Verwendung einer stationären Anionenaustauschphase nach Anspruch 1 zum Trennen von Halogenessigsäuren in Gegenwart anorganischer Anionen.

14. Verwendung nach Anspruch 13 einer stationären Anionenaustauschphase, wobei die Verwendung umfasst:
Fließenlassen eines Elutionsmittels durch eine Chromatographiesäule, wobei die Chromatographiesäule die stationäre Anionenaustauschphase enthält, wobei das Elutionsmittel ein Hydroxid beinhaltet; und
vorzugsweise wobei das Verfahren ferner umfasst:
Trennen wenigstens eines Analyten von einer in die Chromatographiesäule injizierten Probe.

## Revendications

1. Phase stationnaire d'échange d'anions comprenant :
**a)** une particule de substrat chargée négativement ;
**b)** une couche de polymère de condensation de base liée à la particule de substrat chargée négativement, la couche de polymère de condensation de base comprenant :
**i)** des groupes ammonium quaternaire ;
**ii)** des groupes éther ; et
**iii)** des groupes hydroxy, dans lesquels au moins une partie des groupes hydroxy sont espacés des groupes ammonium quaternaire par un premier espaceur à deux carbones et la couche de polymère de condensation de base est formée à partir de méthylamine et d'éther diglycidylique de 1 ,4-butanediol ;
**c)** une couche de polymère de condensation d'éthanolamine réticulée fixée de manière covalente à la couche de polymère de condensation de base, la couche de polymère de condensation d'éthanolamine réticulée comprend :
**i)** des groupes ammonium quaternaire ;
**ii)** des groupes éther, dans lesquels au moins une partie des groupes éther sont espacés des groupes ammonium quaternaire par un second espaceur à deux carbones ;
et
**iii)** des groupes hydroxy, dans lesquels au moins une partie des groupes hydroxy sont espacés des groupes ammonium quaternaire par le premier espaceur à deux carbones ;
et
**d)** une couche de condensation de glycidol fixée de manière covalente à la couche de polymère de condensation d'éthanolamine réticulée, la couche de condensation de glycidol comprend : une pluralité de groupes dihydroxy, dans lesquels chaque groupe dihydroxy comporte un premier groupe hydroxy et un second groupe hydroxy, et le premier hydroxy est espacé du second hydroxy par le premier espaceur à deux carbones, dans lequel au moins une partie des premiers groupes hydroxy sont espacées des groupes ammonium quaternaire de la couche polymère de condensation d'éthanolamine réticulée par le premier espaceur à deux carbones.

2. Phase stationnaire d'échange d'anions selon la **revendication 1,** dans laquelle la particule de substrat chargée négativement comprend une particule de divinylbenzène et d'éthylvinyl benzène réticulée, dans laquelle au moins une surface de la particule de substrat chargée négativement comporte des groupes sulfonate.

3. Phase stationnaire d'échange d'anions **selon la revendication 1 ou la revendication 2,** dans laquelle la couche de polymère de condensation de base est chargée positivement et fixée ioniquement à la particule de substrat chargée négativement.

4. Phase stationnaire d'échange d'anions selon **l'une quelconque des revendications précédentes,** dans laquelle le premier espaceur à deux carbones comprend une formule chimique de 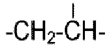 et le second espaceur à deux carbones comprend une formule chimique de

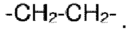

5. Procédé de formation d'une phase stationnaire d'échange d'anions comprenant :
la réaction d'un éther diglycidylique de 1,4-butanediol avec une méthylamine pour former une couche de polymère de condensation de base sur une particule de substrat chargée négativement ;
la réaction de la couche de polymère de condensation de base dans un nombre de cycles de réaction pour former une couche de polymère d'éthanolamine réticulée, dans laquelle le nombre de cycles de réaction est compris entre environ trois et environ dix et chaque cycle de réaction comporte un traitement au polyépoxyde suivi d'un traitement à l'éthanolamine ; et
la réaction de la couche de polymère d'éthanolamine réticulée avec un premier glycidol et ensuite un second glycidol pour former la phase stationnaire d'échange d'anions.

6. Procédé selon **la revendication 5,** qui comprend en outre : le traitement de la couche de polymère d'éthanolamine réticulée avec une solution d'hydroxyde avant chacun du premier traitement au glycidol et du second traitement au glycidol.

7. Procédé selon **la revendication 5 ou la revendication 6,** dans lequel les particules de substrat chargées négativement sont contenues sous forme de lit tassé dans une première colonne, dans laquelle la réaction de l'éther diglycidylique de 1 ,4-butanediol avec la méthylamine comprend : l'écoulement d'une solution d'éther diglycidylique de 1 ,4-butanediol et de méthylamine à travers la première colonne pour former la couche de polymère de condensation de base sur les particules de substrat chargées négativement.

8. Procédé selon **la revendication 7,** dans lequel le traitement au polyépoxyde comprend : l'écoulement d'une solution du polyépoxyde à travers la première colonne ; et le traitement à l'éthanolamine comprend : l'écoulement d'une solution de l'éthanolamine à travers la première colonne.

9. Procédé selon l'une quelconque parmi **les revendications 5 à 8,** dans lequel le premier traitement au glycidol et le second traitement au glycidol comprennent chacun : l'écoulement d'une solution du glycidol à travers la première colonne.

10. Procédé selon l'une quelconque parmi **les revendications 5 à 9,** dans lequel le nombre de cycles de réaction est compris entre environ 3 et environ 4.

11. Procédé selon l'une quelconque des **revendications 5 à 10,** dans lequel la particule de substrat chargée négativement comprend une particule de divinylbenzène et d'éthylvinyl benzène réticulée, dans lequel au moins une surface de la particule de substrat chargée négativement comporte des groupes sulfonates et dans lequel la couche de polymère de condensation de base est chargée positivement et liée ioniquement à la particule de substrat chargée négativement.

12. Procédé selon l'une quelconque parmi **les revendications 5 à 11**, dans lequel le polyépoxyde comprend de l'éther diglycidylique de 1,4-butanediol.

13. Utilisation d'une phase stationnaire d'échange d'anions selon la revendication 1 destinée à séparer des acides halogénoacétiques en présence d'anions inorganiques.

14. Utilisation selon la revendication 13 d'une phase stationnaire d'échange d'anions, l'utilisation comprenant :
l'écoulement d'un éluant à travers une colonne de chromatographie, la colonne de chromatographie contenant la phase stationnaire d'échange d'anions, dans laquelle l'éluant comporte un hydroxyde ; et
de préférence dans laquelle le procédé comprend en outre :
la séparation d'au moins un analyte d'un échantillon injecté dans la colonne de chromatographie.
